# EUROPEAN PATENT SPECIFICATION

(11) **EP 3 684 137 B1**
(45) Date of publication and mention of the grant of the patent: **10.04.2024**
(21) Application number: 19152779.5
(22) Date of filing: 21.01.2019
(51) Int. Cl.: H04W 76/16, H04L 67/125, H04L 67/61

(54) **PROVIDING CONNECTIVITY SERVICE TO MULTIPLE TSN DOMAINS BY A SINGLE 3GPP NETWORK**
BEREITSTELLUNG EINES KONNEKTIVITÄTSDIENSTES FÜR MEHRERE TSN-DOMÄNEN ÜBER EIN EINZELNES 3GPP-NETZWERK
FOURNITURE D'UN SERVICE DE CONNECTIVITÉ À DE MULTIPLES DOMAINES TSN PAR UN SEUL RÉSEAU 3GPP

(43) Date of publication of application: 22.07.2020
(73) Proprietor: Nokia Solutions and Networks Oy, 02610 Espoo (FI)
(72) Inventor: ROST, Peter, 69124 Heidelberg (DE); MARKWART, Christian, 81667 Munich (DE); GAJIC, Borislava, 82008 Unterhaching (DE); MANNWEILER, Christian, 81737 Munich (DE); SIVASIVA GANESAN, Rakash, 82008 Unterhaching (DE)
(74) Representative: Script IP Limited

(56) References cited:
- "3rd Generation Partnership Project; Technical Specification Group Services and System Aspects; Study on enhancement of 5GS for Vertical and LAN Services (Release 16)", 3GPP STANDARD; TECHNICAL REPORT; 3GPP TR 23.734, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 19 December 2018 (2018-12-19) , pages 1-107, XP051591220, [retrieved on 2018-12-19]
- "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.4.0, 18 December 2018 (2018-12-18), pages 1-236, XP051591141, [retrieved on 2018-12-18]

## Description

### Field of the invention

The present invention relates to an apparatus, a method, and a computer program product related to transparent integration of a single wireless network (e.g. a 3GPP network) into one or more wireline networks (e.g. a TSN network) or one or more domains of such wireline networks.

### Background of the invention

Time sensitive networking (TSN) provides industrial networks with deterministic delay to handle time sensitive traffic. Currently, wired links are assumed for connecting sensors and controllers. Moving from wired to wireless sensors or - more generally - from wired to wireless links and actuators provides advantages such as flexibility (in terms of mobility), scalability (in terms of number of sensors or actuators), low cost maintenance etc. To connect the wireless devices to a TSN network, wireless transmission mechanisms such as the ones defined in 3GPP are necessary.

In [1], it has been shown how a 3GPP network shall be transparently integrated with a TSN network. Here, the 3GPP network has been modeled as a TSN bridge (`virtual bridge'). The TSN network can interact with this bridge in the conventional manner defined in IEEE 802.1Q specifications and thereby, the 3GPP network provides wireless connectivity service to the TSN network in a transparent way.

TSN [3] is currently standardized as a mechanism for communication within industrial networks. In TSN, a set of IEEE 802.1 protocols [4] (IEEE 802.1AS-Rev, 802.1CB, 802.1Qcc, 802.1Qch, 802.1Qci, 802.1Qcj, 802.1CM, 802.1Qcp, 802.1Qcr, 802.1AB) is applied to achieve deterministic data transmission with guaranteed low latency with time-aware devices (which need to be configured properly). In parallel to TSN standardization, 3GPP started in 2017 a study on communication for Automation in Vertical Domains to identify respective requirements for wireless communication [5]. These two standards are developed independently to provide E2E connections. **A "Study on enhancement of 5G System (5GS) for vertical and Local Area Network (LAN) services" is document by 3GPP in Technical Report TR 23.734.**

Recently, in [1], a mechanism for transparent integration of wired industrial network e.g. TSN and a wireless network e.g. 3GPP network has been disclosed. Here, two entities namely translator and translator client are defined which, on one hand, translate the commands from TSN network into actions in the 3GPP network and, on the other hand, map the QoS parameters from 3GPP network to corresponding QoS parameters of the TSN network to inform the TSN network about the capabilities of the 3GPP network. The translator and the translator clients encapsulate the 3GPP network as a TSN bridge so that the 3GPP network is transparent to the TSN protocols.

Further, TSN specifications allow for a deployment of multiple industrial TSN domains on a shared network. A TSN domain is constituted by a logical group of Industrial End Stations and IEEE 802.1 bridges which form a network with their own so-called 'Working Clock Timescale' [2]. More in detail, a TSN domain is an intersection of gPTP (generic Precision Time Protocol) domain and SRP (Stream Reservation Protocol) domain [IEEE 802.1ba]. An SRP domain is defined by the tuple (SRP Class, Priority). Furthermore, each priority value is mapped to a TSN Traffic Class. A SRP domain is further defined by its SRP Boundary, which is a set of SRP Boundary Ports [IEEE802.1Qcc]. Furthermore, a Bridge Object defines delay values for tuples (ingress port, Egress port, Traffic class).

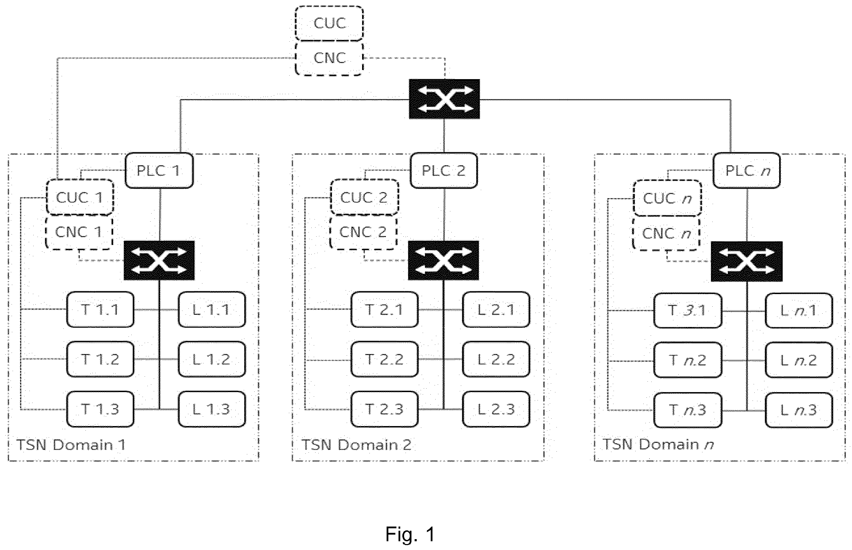

An example setup for multiple TSN domains is shown in the Fig. 1. The example shows three different TSN domains. Each black box with double-arrow cross represents a (logical) TSN bridge. Each logical TSN bridge may comprise plural physical TSN bridges. Within each TSN domain, there are multiple talker end stations (T x.y), listener end stations (L x.y), a programmable logic controller (PLC x) controlling the automation process, Centralized Network Controllers (CNC) controlling the TSN domain (CNC x), and a Centralized User Configuration (CUC x) component. In this nomenclature, "x" identifies the TSN domain, and "y" denotes an instance of the respective station in the TSN domain. In Fig. 1, for the sake of better readability, only the links from CUC x to each respective talkers are shown, the links from CUC x to the respective listeners are omitted.

In this particular example, each TSN domain is controlled by a dedicated CNC x although one CNC could also control multiple TSN domains. One reason for a dedicated CNC per TSN domain is a case where a tenant may run its own TSN domain and may want to operate its own (isolated) CNC.

Note further that TSN implements three different configuration models [4], i.e., fully centralized model, centralized network/distributed user model, and fully distributed configuration model. In the case of a fully distributed model, no CNC would be used.

Furthermore, in this particular example, a CUC may be associated with the PLC if there is exactly one automation process control logic performed within the network (in general, there may be multiple CUCs in the same network controlled by a CNC). The individual TSN domains may belong to the same automation process such that an interaction between the individual TSN domains would be necessary, e.g., in the case of a production belt. The communication and interaction between the individual PLCs is controlled by another CNC and CUC, respectively (shown on top part of Fig. 1). In Fig. 1, for better readability, only the link from top CNC to CUC 1 is shown, the links from top CNC to CUC 2 and CUC 3 are omitted.

In 3GPP, a Network Function (NF) is a processing function in a network, which has defined functional behaviour and 3GPP defined interfaces. A network function can be implemented either as a network element on a dedicated hardware, as a software instance running on a dedicated hardware, or as a virtualised function instantiated on an appropriate platform, e.g. on a cloud infrastructure. A Network Slice (NS) is a logical network that provides specific network capabilities and network characteristics. A Network Slice instance is a set of Network Function instances and the required resources (e.g. compute, storage and networking resources) which form a deployed Network Slice.

An S-NSSAI identifies a Network Slice, i.e., a logical network that provides specific network capabilities and network characteristics. An S-NSSAI may comprise:
- A Slice/Service type (SST), which refers to the expected Network Slice behaviour in terms of features and services;
- A Slice Differentiator (SD), which is optional information that complements the Slice/Service type(s) to differentiate amongst multiple Network Slices of the same Slice/Service type.

According to 3GPP TS 23.501, in particular Section 5.15.5.3, and 3GPP TS 23.503, in particular Section 6.6.2.1, the PDU Session Establishment in a Network Slice to a DN (data network) allows data transmission in a Network Slice. A PDU Session is associated to a S-NSSAI (Single NSSAI, comprised in NSSAI) and a DNN (data network name). A UE that is registered in a PLMN over an Access Type and has obtained a corresponding Allowed NSSAI may indicate in the PDU Session Establishment procedure the S-NSSAI according to the Network Slice selection policy (NSSP) in the URSP and, if available, the DNN the PDU Session is related to. The UE includes the appropriate S-NSSAI from this Allowed NSSAI and, if mapping of the Allowed NSSAI to HPLMN S-NSSAIs was provided, an S-NSSAI with the corresponding value from this mapping.

The network (Home PLMN, HPLMN) may provision the UE with Network Slice selection policy (NSSP) as part of the URSP rules. The NSSP rules associate an application with one or more S-NSSAIs in Configured NSSAI for the HPLMN of the UE. The UE stores the URSP rules, including the NSSP.

A URSP rule may comprise an application descriptor. It may be used to identify application(s) running on the UE. The application identifier may be mapped to a specific application traffic detection rule. Furthermore, a URSP rule may comprise either one or more IP descriptors and one or more non-IP descriptors. They describe the destination of the IP traffic and non-IP traffic, respectively, to which the URSP rule is applicable.

A QoS Flow differentiates different QoS (Quality of Service) in a PDU Session. A QoS Flow ID (QFI) is used to identify a QoS Flow in the 5G System. User Plane traffic with the same QFI within a PDU Session receives the same traffic forwarding treatment (e.g. scheduling, admission threshold). Within the 5GS, a QoS Flow is controlled by the SMF and may be preconfigured, or established via the PDU Session Establishment procedure, or the PDU Session Modification procedure.

Among other parameters, any QoS Flow is characterized by one or more QoS rule(s). The UE performs the classification and marking of uplink User plane traffic, i.e. the association of uplink traffic to QoS Flows, based on the QoS rules. For instance, these QoS rules may be explicitly provided to the UE (i.e. explicitly signalled QoS rules using the PDU Session Establishment/Modification procedure), or pre-configured in the UE. A QoS rule contains the QFI of the associated QoS Flow and a Packet Filter Set.

There can be more than one QoS rule associated with the same QoS Flow (i.e. with the same QFI). Therefore, the QoS rules may contain a precedence value indicating the order in which QoS rules are to be evaluated.

For Ethernet PDU session type, the packet filter set may support packet filters based on an identifier (tag) of a VLAN (Virtual Local Area Network) (see e.g. 3GPP TS 23.501, Section 5.7.6.3).

### References:

[1] PCT/EP2018/054916, "Transparent Integration of 3GPP network with TSN based industrial network", Application date 28 February 2018
[2] E. Gardiner et al., "Theory of Operation for TSN-enabled Systems applied to Industrial Markets", Avnu Alliance, 20
[3] R. Hummen, S. Kehrer, O. Kleineberg, "TSN - Time Sensitive Networking", White Paper, Hirschmann
[4] http://www.ieee802.org/1/
[5] 3GPP TR 22.804 V0.3.0 "Study on Communication for Automation in Vertical Domains (Release 16)", Dec. 2017

The following versions of cited standard documents are considered:
- 3GPP TS 23.501 "System Architecture for the 5G System; Stage 2 (Release 15), V15.2.0", June 2018
- 3GPP TS 23.503 "Policy and Charging Control Framework for the 5G System; Stage 2 (Release 15), V15.2.0", June 2018
- IEEE 802.1Qcc/D2.0 "Draft Standard for Local and metropolitan area networks - Bridges and Bridged Networks, Amendment: Stream Reservation Protocol (SRP) Enhancements and Performance Improvements," October 2017

### Summary of the invention

It is an object of the present invention to improve the prior art.

According to a first aspect of the invention, there is provided an apparatus, comprising means for storing configured to store a mapping table comprising a respective rule parameter for each of one or more **TSN** domain identifiers such that each of the one or more **TSN** domain identifiers is related to a respective rule parameter, **wherein the TSN domain identifiers identify TSN domains;** means for monitoring configured to monitor if a request to set up a **TSN** stream for a **TSN** domain is received, wherein the **TSN** domain is identified by a first **TSN** domain identifier of the one or more **TSN** domain identifiers; means for mapping configured to map, if the request is received, the first domain identifier to a first rule parameter of the rule parameters based on the mapping table; means for identifying configured to identify a stored first rule comprising the first rule parameter; means for obtaining configured to obtain a **network** slice identifier from the **identified** first rule; means for requesting configured to request to establish a session through a network slice identified by the **network** slice identifier, wherein the session is to carry the **TSN** stream.

According to **another** aspect of the invention, there is provided a method **for establishing a session for TSN stream,** comprising storing a mapping table comprising a respective rule parameter for each of one or more **TSN** domain identifiers such that each of the one or more **TSN** domain identifiers is related to a respective rule parameter **wherein the TSN domain identifiers identify TSN domains;** monitoring if a request to set up a **TSN** stream for a **TSN** domain is received, wherein the **TSN** domain is identified by a first **TSN** domain identifier of the one or more **TSN** domain identifiers; mapping, if the request is received, the first **TSN** domain identifier to a first rule parameter of the rule parameters based on the mapping table; identifying a stored first rule comprising the first rule parameter; obtaining a **network** slice identifier from the **identified** first rule; requesting to establish a session through a network slice identified by the **network** slice identifier, wherein the session is to carry the **TSN** stream.

**The method** according to the fourth **aspect** may be a method of providing connectivity service.

According to a **another** aspect of the invention, there is provided a computer program product comprising a set of instructions which, when executed on an apparatus, is configured to cause the apparatus to carry out the method according to the fourth **aspect.** The computer program product may be embodied as a computer-readable medium or directly loadable into a computer.

According to some example embodiments of the invention, at least one of the following advantages may be achieved:
- traffic from different TSN domains may be kept separate in a single 3GPP network;
- traffic of one TSN domain may not have impact in another TSN domain using the same 3GPP network;
- existing 3GPP mechanisms are exploited.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred example embodiments of the present invention which is to be taken in conjunction with the appended drawings, wherein:
Fig. 1 shows an example setup of multiple TSN domains;
Fig. 2 shows an example setup of multiple TSN domains sharing the same mobile network infrastructure (Single Bridge Option) according to some example embodiments of the invention;
Fig. 3 shows an example setup of multiple TSN domains sharing the same mobile network infrastructure (Multi-Bridge Option) according to some example embodiments of the invention;
Fig. 4 shows option 1 with one TSN Translator Client and one TSN Translator CP/UP shared by all 3GPP network slices and TSN domains according to some example embodiments of the invention;
Fig. 5 shows option 2 with shared TSN Translator Client and shared TSN Translator CP with a dedicated TSN Translator UP for each TSN domain / 3GPP network slice according to some example embodiments of the invention;
Fig. 6 shows option 3 with dedicated TSN Translator Client and one TSN Translator UP per TSN Domain but shared TSN Translator CP according to some example embodiments of the invention;
Fig. 7 shows option 4 with completely independent TSN Translator (incl. TSN Translator client) for each TSN domain and slice according to some example embodiments of the invention;
Fig. 8 shows an apparatus according to an example embodiment of the invention;
Fig. 9 shows a method according to an example embodiment of the invention;
Fig. 10 shows an apparatus according to an example embodiment of the invention;
Fig. 11 shows a method according to an example embodiment of the invention;
Fig. 12 shows an apparatus according to an example embodiment of the invention;
Fig. 13 shows a method according to an example embodiment of the invention; and
Fig. 14 shows an apparatus according to an example embodiment of the invention.

### Detailed description of certain example embodiments

Herein below, certain example embodiments of the present invention are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

In an industrial network, it may be necessary to separate the operation of different parts of the same automation process, of different automation processes within the same factory, of different equipment vendors within the same automation processes or factory, or of different tenants deploying and using these devices. For each of them possibly an own TSN domain [2] or own logical network may be necessary. These individual domains should be
1. Isolated in terms of resource usage, i.e., no side-effects must happen between different domains;
2. Independent in terms of operation, e.g., IO devices may only be visible to individual Centralized User Configuration (CUC) entities isolated by the network;
3. Secure such that data exchange in one TSN domain must not be read and understood in another domain;
4. each TSN domain may be subject to a different TSN time.

These requirements shall be fulfilled by the underlying transport network. According to some example embodiments of the invention, at least part of the underlying transport network is a wireless network such as a 3GPP mobile network.

According to some example embodiments of the invention, a single 3GPP network may be represented as at least one TSN bridge towards TSN entities in order to simultaneously support end to end communications of these TSN entities belonging to one or more TSN domains. It is described how the mapping of each of the one or more TSN domains to an individual Network Slice is performed; how the mapping is signalled, and which parameters are used for the addressing of the at least one TSN bridge.

Some example embodiments are explained on the basis of the example setup of Fig. 1, which shows a fully centralized model. However, the invention is not limited to this scenario. Some example embodiments of the invention are applicable to any of the three TSN configuration models and do not assume a particular TSN configuration model. The number of domains, talkers per each domain, listeners per each domain etc. is arbitrary. Some domains may comprise more or less than one PLC. The top CNC and CUC may be connected to only some of the TSN domains or may be omitted.

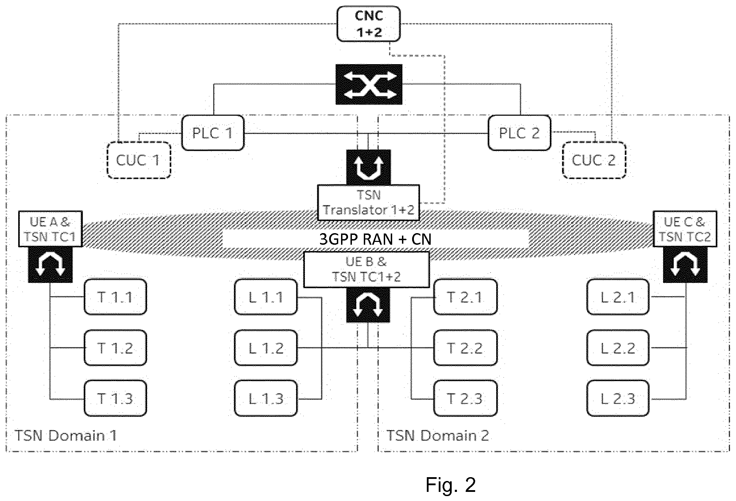

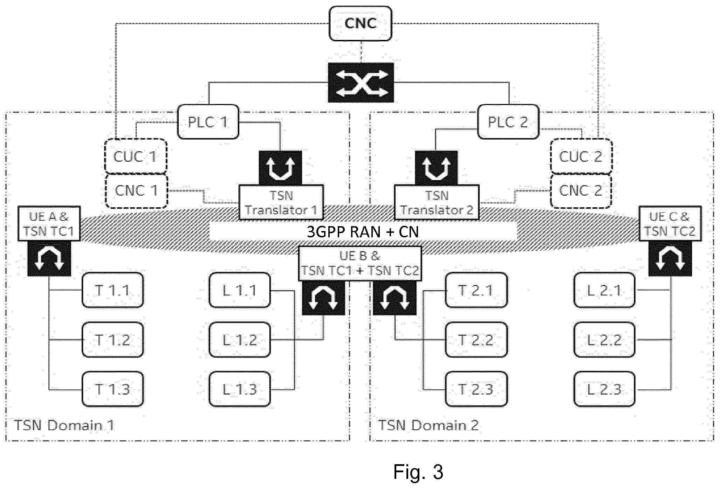

In factory environments, there is a strong demand to replace parts of the wired infrastructure with wireless communications links, i.e., to deploy wireless/mobile networks. In such a deployment, the multiple TSN domains may share the same mobile network infrastructure as illustrated in Fig. 2and Fig. 3, respectively, depicting some example embodiments of the invention comprising two TSN domains represented by CUC1 and CUC2. A main difference between these two options is that in Fig. 2the mobile network is represented to the TSN network as a single bridge, while in Fig. 3the mobile network is represented to the TSN network as multiple bridges. In Figs. 2 and 3, for the sake of better readability, links from talkers and listeners to CUC1 and CUC2 are not shown.

For both options, the devices L1.y and T2.y share the same User Equipment, UE B, while being part of two different TSN domains. The black symbol corresponding to half of the symbol of the bridge indicates an ingress port or egress port of at least one TSN bridge. Thus, the mobile network acts, via TSN translator and TSN translator client (TSN TC), as a TSN bridge towards a TSN Ethernet network, as described in [1]. Furthermore, the devices T1.y are connected through UE A, and the devices L2.y are connected through UE C. All UEs are served by the same mobile network indicated by the black and white shaded ellipse labelled '3GPP RAN + CN', i.e., 3GPP radio access network + core network.

### Single Bridge Option (Fig. 2)

In case that the mobile network is represented as a single bridge to the TSN network(s), a single bridge handles the multiple TSN domains via a domain aware TSN Translator (TSN Translator 1+2) connected to the Core Network and respective domain specific TSN Translator Clients (TSN Translator Client 1 and TSN Translator Client 2) connected to UE A and UE C or domain aware TSN Translator Clients (TSN TC 1+2) connected to UE B. For more flexibility the domain aware TSN Translator and the domain aware TSN Translator Client(s) may support also multiple ingress and egress ports (not shown in Fig. 2).

The multiple TSN domain support with the Single Bridge Option can be used for all TSN configuration models. If the fully centralized model or the centralized network/distributed user model is deployed, a single CNC (CNC 1+2 in Fig. 2) is responsible to manage the "single bridge" representing the mobile network (3GPP RAN + CN) and its network resources.

In order to isolate the traffic of one TSN domain from traffic of another TSN domain, UEs serving a particular TSN domain may be connected through the network slice that is assigned to said TSN domain (UE A, UE C). A UE serving multiple TSN domains (such as UE B) is connected to multiple network slices where each provides an isolated and possibly customized connectivity. A domain aware TSN Translator (TSN Translator 1+2) connected to the CN is configured to map domain specific TSN traffic to the mobile network slice that is dedicated to said TSN domain. A corresponding functionality is provided by the domain aware TSN Translator Clients (TSN TC 1+2) that is connected to the UE (UE B).

### Multi Bridge Option (Fig. 3)

In case that the mobile network is represented as multiple bridges to the TSN network(s), the mobile network provides for each TSN domain an individual bridge to the TSN network(s). In the example embodiment shown in Fig. 3, domain specific TSN Translators (TSN Translator 1, TSN Translator 2) are connected to the Core Network and respective domain specific TSN Translator Clients (TSN Translator Client 1, TSN Translator Client 2) are connected to UE A and UE C and a domain specific TSN Translator Client (TSN TC 1 + TSN TC 2) is connected to UE B. For more flexibility, the domain specific TSN Translator Client(s) (TSN TC1, TSN TC2) may support also multiple ingress and egress ports while the domain specific TSN Translator Client (TSN TC 1+2) may also support a single ingress or egress port (both are not shown in Fig. 3).

The Multi Bridge Option can be used to support multiple TSN domains for all TSN configuration models. Even when the fully centralized model or the centralized network/distributed user model is deployed, each TSN domain may use an own CNC (CNC 1, CNC 2) which is responsible to manage the "individual bridge" representing the network slice of the mobile network (3GPP RAN + CN) and its network resources that are dedicated to the TSN domain.

In order to isolate the traffic of one TSN domain from traffic of another TSN domain, UEs serving a particular TSN domain may be connected through the network slice that is assigned to said TSN domain (UE A, UE C). A UE serving multiple TSN domains (such as UE B) may be connected to multiple network slices where each provides an isolated and possibly customized connectivity. A domain specific TSN Translator (TSN Translator 1, TSN Translator 2) connected to the CN is configured to map domain specific TSN traffic to the mobile network slice that is dedicated to said TSN domain. A corresponding functionality is provided by the domain specific TSN Translator Clients (TSN TC 1, TSN TC 2) that are connected to the UE (UE B).

### Mapping of TSN Domain to Mobile Network Slices

The mapping of each TSN domain to the 3GPP network and vice versa may be performed by the domain specific and the domain aware TSN Translators and the domain specific and the domain aware TSN Translator Clients as follows:
Some example embodiments of the invention provide a method to map a TSN domain to a network slice, and to use the correct network slice information during the PDU Session Establishment. This mapping/association of TSN domains to Network Slices uses the "Application ID" descriptor in the UE Route Selection Procedure (URSP) [3GPP TS 23.501, Section 5.15.5.3]. In addition or alternatively, the IP description and "Non-IP descriptor" of the URSP may be applied.

Some example embodiments of the invention further disclose a method to map TSN Streams to QoS Flows after a PDU Session has been established. For this association, a new field in the QoS rule may be applied; alternatively, the mapping may be performed on the basis of VLAN-IDs [3GPP TS 23.501, Section 5.7.6.3].

In the following, individual implementation options for the mapping of TSN Domains to Network Slices according to some example embodiments of the invention are detailed.

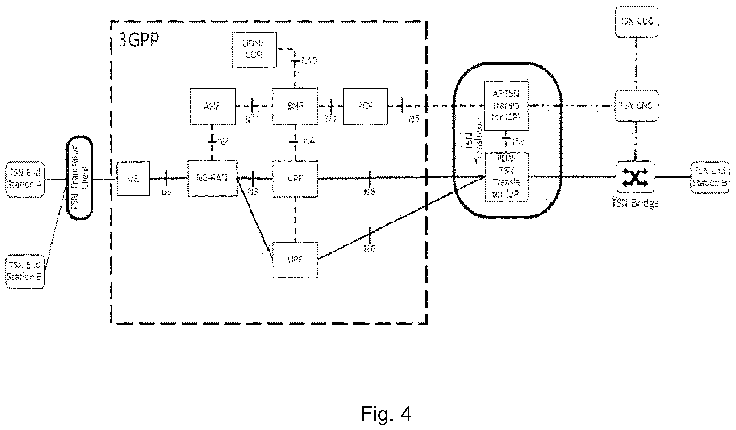

In the first option, shown in Fig. 4, a UE may use only one TSN Translator Client and the network side will use one TSN Translator (user plane; UP) for user plane traffic and one TSN Translator (control plane; CP) for control plane traffic (which corresponds to the Single Bridge case shown in Fig. 2). On 3GPP network side, each network slice may comprise an individual User Plane Function (UPF) identified by a NSSAI (Network Slice Selection Assistance Information). Each UPF is connected to the same TSN Translator, which controls the mapping of PDU sessions to individual bridge ports. As such, all TSN bridge ports are a shared resource assigned individually to the TSN domains, both on network side (TSN translator) and UE side (TSN translator client). As mentioned with respect to Fig. 2, in this case, the 3GPP 5Gs is represented as one (a single) TSN bridge towards the CNC.

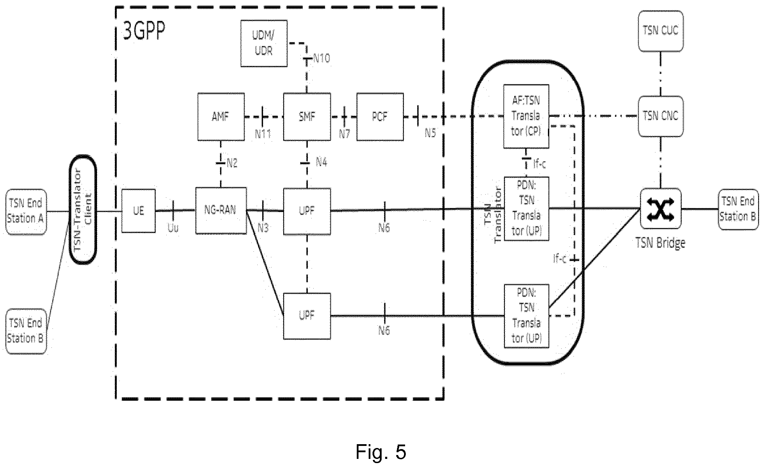

In the second option, shown in Fig. 5, each network slice does not only comprise an individual UPF but also an individual TSN Translator (UP). Both TSN Translator (UP) instances would be controlled by the same TSN Translator (CP). The advantage of this approach is that each tenant of an individual network slice may implement a customized TSN Translator (UP). The TSN Translator (CP) may still represent the 3GPP 5GS (5G System) as a single bridge (see Fig. 2); in this case, the port assignment and control of the shared resource "TSN bridge ports" is performed by the TSN Translator (CP). If the 3GPP 5GS is represented as multiple bridges (see Fig. 3), the TSN Translator (CP) maintains individual management interfaces towards the CNC for each TSN Translator (UP). Each TSN Translator (UP) is connected to an own set of TSN bridge ports.

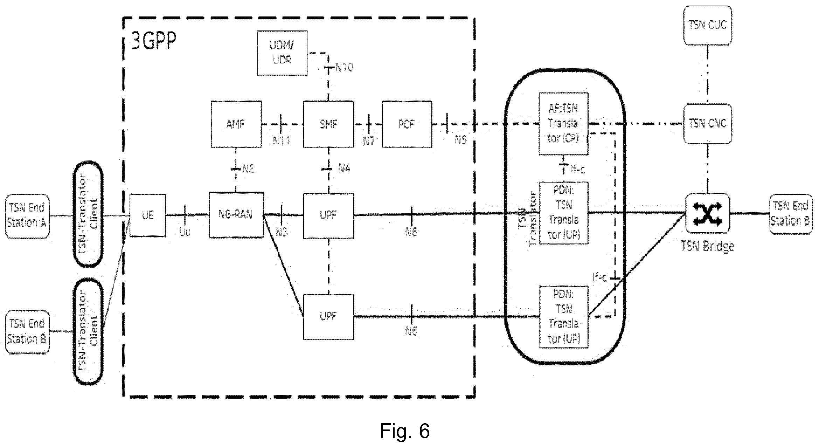

In the third option, shown in Fig. 6, Option 2 is extended with an individual TSN Translator Client for each network slice (in line with Fig. 3). Therefore, this option provides the same degrees of freedom as Option 2. In addition, the implementation of an additional TSN Domain requires the instantiation of an additional TSN Translator Client, which provides more degrees of customization of the network slice tenant but also requires more complexity at the UE side because additional resources need to be allocated and the number of parallel executed TSN Translator Clients might be limited.

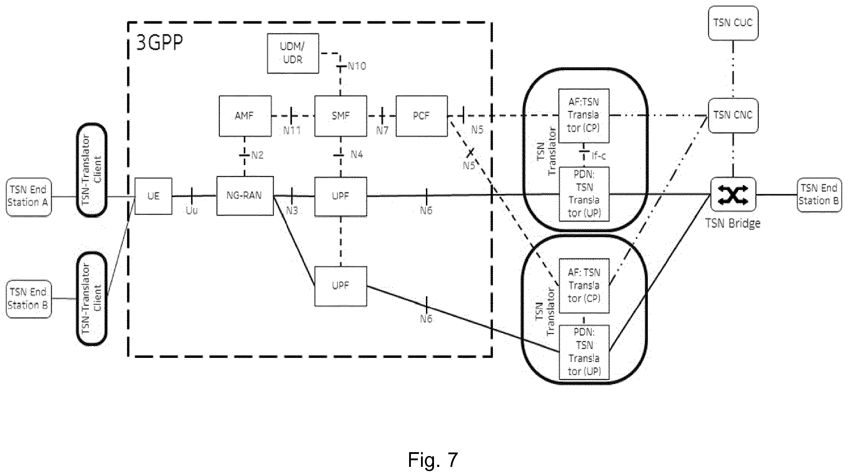

Finally, Option 4 is shown in Fig. 7 and it extends Option 3 such that each TSN Domain also comprises an own TSN Translator (CP), which manages the interface towards CNC for one single TSN Translator (UP). This increases the degrees of customization for the network slice tenant.

### Mapping of Network Slices to TSN Domains

In all of the above the options, the TSN Translator and 5GS must be able to associate a TSN Domain uniquely with a 3GPP Network Slice. For this association, some example embodiments of the invention make use of and extend the UE Route Selection Procedure (URSP) [3GPP TS 23.501, Section 5.15.5.3][3GPP TS 23.503, Section 6.6.2.1].

In general, the CNC defines TSN domains based on the connectivity requirements between Talker and Listener end stations. After TSN domains have been defined by the CNC, the CNC may provide the information about TSN domains to the 3GPP Bridge, i.e. the TSN Translator (CP).

As an alternative, the setup of TSN domains may also be provided as pre-configuration information to the TSN Translator (CP), e.g., through a network configuration tool. This enables grouping of devices (e.g., by vendors, machines, etc.) and may ensure that those devices communicate within a separate logical sub-network. The setup of the individual TSN domains may be reflected in the bridge object communicated by the TSN Translator to the CNC, which then only provides information for those tuples (ingress port, egress port, traffic class), which are consistent with the TSN domain setup pre-configured in the TSN Translator (CP). This would be applicable to implementation options 1, 2, and 3, respectively, explained above. It is also applicable to implementation option 4 above if one TSN Translator (UP/CP) handles more than one network slice.

In some example embodiments of the invention, there may be a mixture of TSN domain(s) defined by CNC and preconfigured TSN domain(s). In some example embodiments, two or more TSN Domains may be mapped to a same network slice, while in other example embodiments, each TSN domain is mapped to an individual network slice.

For instance, using the example of Fig. 3, the TSN Translator 1 may only signal to CNC (ingress port, egress port, traffic class 1) tuples for all Talker and Listener devices in TSN Domain 1; and TSN Translator 2 may report (ingress port, egress port, traffic class 2) tuples for all Talker and Listener devices in TSN Domain 2. Alternatively, the TSN Translator 1+2 in Fig. 2 or TSN Translator 1 and TSN Translator 2 in Fig. 3 may use disjunct egress ports for both TSN domains, e.g., if both TSN Domains are served by different UPFs. The TSN Translator Clients will receive information from the TSN Translator about the pre-configuration information provided about the TSN domain setup related to the particular UE. During initial PDU session establishment, the TSN Translator Clients must use this information to make sure that the correct network slice is utilized during network registration process.

According to some example embodiments of the invention, each TSN Domain is associated to an own "Application ID" applied by the URSP. This association is known by the TSN Translator Client, which sets the corresponding "Application ID" for the PDU Session Establishment request in the 3GPP network. The PDU Session Establishment request is triggered by the UE. The 3GPP network selects the URSP rule based on the "Application ID" and selects a Network Slice (identified by S-NSSAI) based on the selected URSP rule. The selected S-NSSAI is used for the PDU Session Establishment.

PCF uses the configuration information about the TSN domain setup in order to set up corresponding URSP rules, i.e. a rule comprising the "Application Id" and the S-NSSAI as part of the route selection descriptor in the URSP rule. For example, if the TSN domains are preconfigured, the network configuration tool may inform the PCF on the domains and the related S-NSSAI. If CNC configures the TSN domains, CNC may inform PCF thereon, or PCF may retrieve the information on the domains from CNC. PCF will receive the information on the related S-NSSAI from a network configuration tool of the 3GPP network.

The URSP is known to the UE (initiating a session on client side). An Application Function such as TSN Translator (CP) or TSN Translator Client (CP) may trigger a UE to establish a PDU Session for a given "Application ID". If the Application Function (such as TSN Translator or TSN Translator Client) is related to plural TSN domains, the "Application Id" may distinguish the different TSN domains. I.e, the same application function may have plural Application IDs in this case.

As an alternative to a unique association of a TSN domain to an "Application ID", all TSN Applications may use the same "Application ID" and differentiate the individual TSN Domains using a single IP address (IP Descriptor) given in the URSP's IP descriptor. For example, a management IP address of TSN Translator (CP) may be used in implementation options 2 thru 4). As an alternative to the IP descriptor, a DNN (Non-IP Descriptor) may be used to distinguish different TSN domains and related S-NSSAIs of the same Application ID.

In such example embodiments, (non)-IP Descriptor may be only applied during PDU Session Establishment for distinguishing TSN domains with the same Application ID. I.e., in such example embodiments, the (non-)IP descriptor does not indicate the destination of a packet but distinguishes different TSN domains and network slices. I.e., it may happen that the destination address of a user-plane IP packet in the corresponding PDU Session may not use the IP address given in the URSP's IP descriptor. In order to distinguish this particular meaning of the (non)-IP descriptor field from its regular meaning, the Application ID is evaluated.

In some example embodiments, the application ID may not be present in the URSP rule and different TSN domains and related S-NSSAIs are distinguished by (non)-IP descriptor field only. In such example embodiments, the (non)-IP descriptor field is selected from a predefined number range indicating that the (non)-IP descriptor field does not have its regular meaning.

As a still further option, a new field for distinguishing different TSN domains may be introduced into URSP. Such an additional field may be independent of TSN and applicable to any (bridged) Ethernet network by configuring a "MAC-port mapping table" in the UE and UPF. In this case, the TSN Translator (CP) or the OAM system need knowledge of attached devices a-priori because the MAC address is related to the hardware and not assigned by the 3GPP network.. The same applies for the use of the non-IP descriptor field in the URSP rule.

### Mapping of TSN Streams to QoS Flows

After a PDU session has been established (preferably within the correct Network Slice, as described hereinabove) TSN Streams are configured by the CNC and may be transported over the 3GPP 5GS. Based on the CNC provided information on the individual TSN Streams, the SMF sets up a QoS Flow with appropriate QoS Profile matching the TSN Stream requirements. Furthermore, it sets up a QoS rule to configure a unique association between a QoS Flow Identifier (QFI) and a TSN Stream represented by the tuple (destination MAC address, VLAN ID, PCP), e.g. according to [3GPP TS 23.501, Section 5.7.1.4]. The mapping according to the QoS rule is done within UE and UPF.

According to some example embodiments of the invention, the QoS rule comprises
a. A new field which identifies TSN Stream(s), and
b. A new field which identifies the source MAC address (applicable to bridging UEs). A bridging UE connects multiple TSN talkers with different QoS requirements. For each, an own stream corresponding to the MAC address is set up.

Alternatively, the mapping may exploit VLAN tags. In TSN, a TSN Stream may be linked with a VLAN-ID (which is also applied in Profinet) [IEEE 802-1Qcc, Section 46.2]. In some example embodiments of the invention, TSN (CUC) sets the VLAN ID according to the requested QoS.

In this option, the UE may receive QoS rules with a packet filter set based on VLAN ID, and UE applies the packet filter on the received TSN Ethernet Packets to map them to corresponding QoS Flows based on VLAN-IDs. In this case, more than one TSN Stream can be carried over the same QoS Flow (e.g., if both correspond to the same QoS priority class). Note that VLAN-IDs are defined individually for each TSN domain.

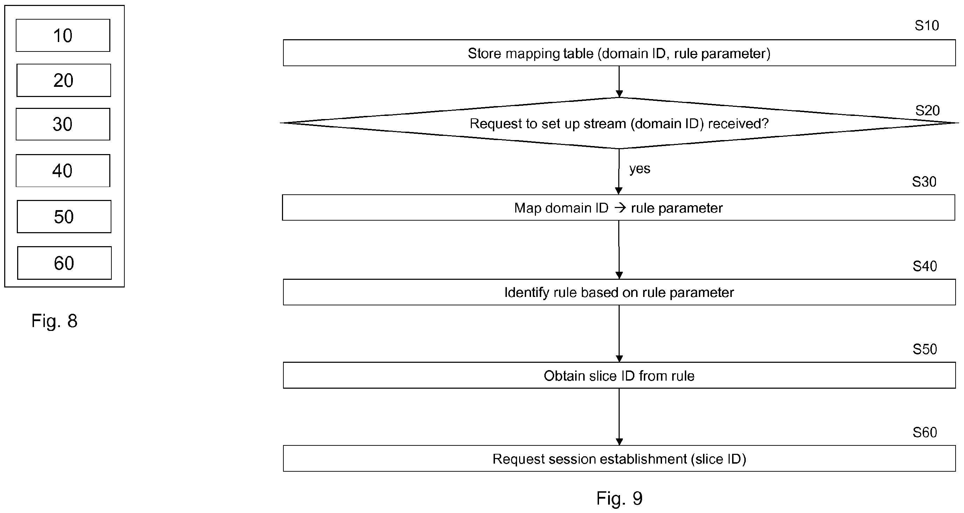

Fig. 8 shows an apparatus according to an example embodiment of the invention. The apparatus may be a terminal (UE), or an element thereof. Fig. 9 shows a method according to an example embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises means for storing 10, means for monitoring 20, means for mapping 30, means for identifying 40, means for obtaining 50, and means for requesting 60. The means for storing 10, means for monitoring 20, means for mapping 30, means for identifying 40, means for obtaining 50, and means for requesting 60 may be a storing means, monitoring means, mapping means, identifying means, obtaining means, and requesting means, respectively. The means for storing 10, means for monitoring 20, means for mapping 30, means for identifying 40, means for obtaining 50, and means for requesting 60 may be a storage device, monitor, mapper, identifier, obtainer, and requester, respectively. The means for storing 10, means for monitoring 20, means for mapping 30, means for identifying 40, means for obtaining 50, and means for requesting 60 may be a storing processor, monitoring processor, mapping processor, identifying processor, obtaining processor, and requesting processor, respectively.

The means for storing 10 stores a mapping table (S10). The mapping table comprises a respective rule parameter for each of one or more domain identifiers. Each of the one or more domain identifiers is related to a respective rule parameter.

The means for monitoring 20 monitors if a request to set up a stream for a domain is received (S20). The domain is identified by a first domain identifier of the one or more domain identifiers.

If the request is received (S20 = "yes"), the means for mapping 30 maps the first domain identifier to a first rule parameter of the rule parameters based on the mapping table (S30). That is, the means for mapping 30 maps the first domain identifier to the corresponding rule parameter (=first rule parameter) according to the mapping table. The rule parameter may be an application ID, an IP descriptor, and/or a non-IP descriptor.

The means for identifying 40 identifies a stored first rule comprising the first rule parameter (S40). The means for obtaining 50 obtains a slice identifier from the first rule (S50).

The means for requesting 60 requests to establish a session through a network slice identified by the slice identifier, wherein the session is to carry the stream (S60).

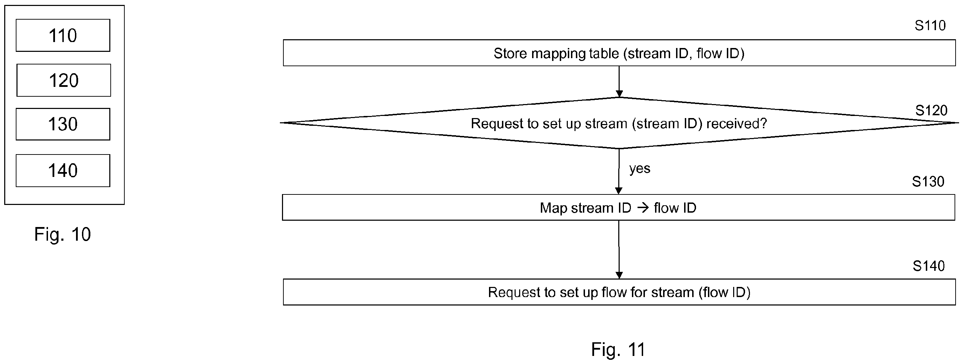

Fig. 10 shows an apparatus according to an example embodiment of the invention. The apparatus may be a terminal (UE), or an element thereof. Fig. 11 shows a method according to an example embodiment of the invention. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises means for storing 110, means for monitoring 120, means for mapping 130, and means for requesting 140. The means for storing 110, means for monitoring 120, means for mapping 130, and means for requesting 140 may be a storing means, monitoring means, mapping means, and requesting means, respectively. The means for storing 110, means for monitoring 120, means for mapping 130, and means for requesting 140 may be a storage device, monitor, mapper, and requester, respectively. The means for storing 110, means for monitoring 120, means for mapping 130, and means for requesting 140 may be a storing processor, monitoring processor, mapping processor, and requesting processor, respectively.

The means for storing 110 stores a mapping table (S110). The mapping table comprises a respective flow identifier for each of one or more stream identifiers. Each of the one or more stream identifiers is related to a respective flow identifier.

The means for monitoring 120 monitors if a request to set up a flow for a stream of an ethernet network is received (S120). The stream is identified by a first flow identifier of the one or more flow identifiers.

If the request is received (S120 = "yes"), the means for mapping 130 maps the first stream identifier to a first flow identifier of the one or more flow identifiers based on the mapping table (S130). That is, the means for mapping 130 maps the first stream identifier to the corresponding flow identifier (=first flow identifier) according to the mapping table.

The means for requesting 140 requests to set up the flow identified by the flow identifier (S140).

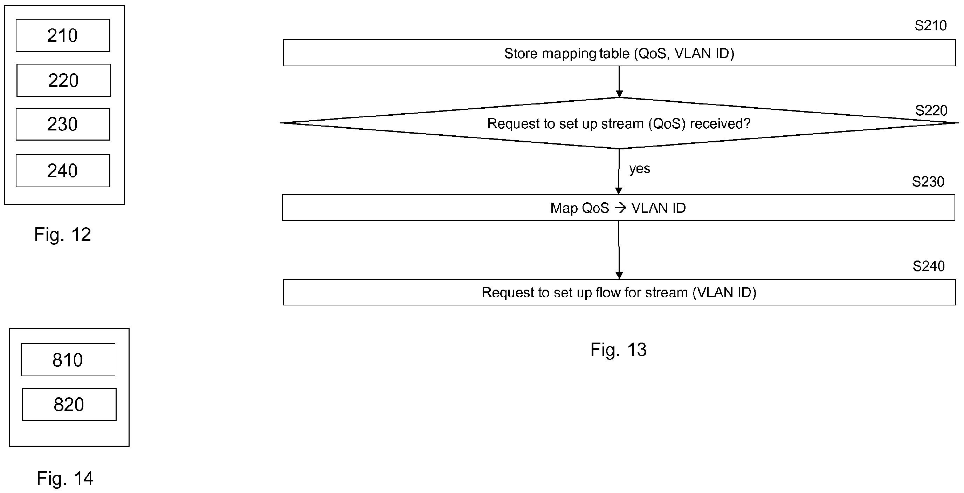

Fig. 12 shows an apparatus according to an example embodiment of the invention. The apparatus may be a network entity of a TSN network such as a CUC, or an element thereof. Fig. 13 shows a method according to an example embodiment of the invention. The apparatus according to Fig. 12 may perform the method of Fig. 13 but is not limited to this method. The method of Fig. 13 may be performed by the apparatus of Fig. 12 but is not limited to being performed by this apparatus.

The apparatus comprises means for storing 210, means for monitoring 220, means for mapping 230, and means for requesting 240. The means for storing 210, means for monitoring 220, means for mapping 230, and means for requesting 240 may be a storing means, monitoring means, mapping means, and requesting means, respectively. The means for storing 210, means for monitoring 220, means for mapping 230, and means for requesting 240 may be a storage device, monitor, mapper, and requester, respectively. The means for storing 210, means for monitoring 220, means for mapping 230, and means for requesting 240 may be a storing processor, monitoring processor, mapping processor, and requesting processor, respectively.

The means for storing 210 stores a mapping table (S210). The mapping table comprises a respective virtual network identifier for each of one or more quality of service classes. Each of the one or more quality of service identifiers is related to a respective virtual network identifier.

The means for monitoring 220 monitors if a stream with a first quality of service class of the one or more quality of service classes is to be set up (S220).

If the stream is to be set up (S220 = "yes"), the means for mapping 230 maps the first quality of service class to a first virtual network identifier of the one or more virtual network identifiers based on the mapping table (S230). That is, the means for mapping 130 maps the first quality of service class to the corresponding virtual network identifier (= first virtual network identifier) according to the mapping table.

The means for requesting 240 requests a wireless network to set up a flow for the stream (S240). The request comprises the first virtual network identifier.

In some example embodiments of the invention, the apparatus of Fig. 8 may comprise one of the apparatuses of Figs. 10 and 12 such that the method of Fig. 9 continues with the method of one of Figs. 11 and 13, respectively.

Fig. 14 shows an apparatus according to an example embodiment of the invention. The apparatus comprises at least one processor 810, at least one memory 820 including computer program code, and the at least one processor 810, with the at least one memory 820 and the computer program code, being arranged to cause the apparatus to at least perform the method according to one of Figs. 9, 11, and 13 and related description.

Some example embodiments of the invention are described with respect to a 3GPP network. However, the invention is not limited to 3GPP networks. It may be applied to other wireless networks such as a WiFi network, too.

Some example embodiments of the invention are described with respect to an industrial TSN network. However, the invention is not limited to industrial TSN networks. It may be applied to other (non-industrial) TSN networks and to other fixed line networks, too.

Some example embodiments of the invention are described with respect to plural TSN domains. However, the invention is not restricted to plural TSN domains. It may be applied to a single TSN domain, too. E.g., a 3GPP network operator may want to carry all TSN traffic for that single TSN domain by a specific 3GPP network slice.

Precision Time Protocol (PTP) and gPTP are examples of time protocols. However, the invention is not limited to these time protocols. Other time protocols may be applied.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

According to the above description, it should thus be apparent that example embodiments of the present invention provide, for example, a translator or a translator client, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

## Claims

1. Apparatus, comprising
means for storing configured to store a mapping table comprising a respective rule parameter for each of one or more time sensitive networking, TSN, domain identifiers such that each of the one or more TSN domain identifiers is related to a respective rule parameter, wherein the TSN domain identifiers identify TSN domains;
means for monitoring configured to monitor if a request to set up a TSN stream for a TSN domain is received, wherein the TSN domain is identified by a first TSN domain identifier of the one or more TSN domain identifiers;
means for mapping configured to map, if the request is received, the first TSN domain identifier to a first rule parameter of the rule parameters based on the mapping table;
means for identifying configured to identify a stored first rule comprising the first rule parameter;
means for obtaining configured to obtain a network slice identifier from the identified first rule;
means for requesting configured to request to establish a session through a network slice identified by the network slice identifier, wherein the session is to carry the TSN stream.

2. The apparatus according to claim 1, wherein each of the TSN domain identifiers comprises a respective identifier of a time protocol domain and a respective identifier of a stream reservation protocol domain.

3. The apparatus according to any of claims 1 and 2, wherein the rule parameter comprises an application identifier.

4. The apparatus according to any of claims 1 to 3, wherein the rule parameter comprises one of an internet protocol descriptor and a non-internet protocol descriptor.

5. Method for establishing a session for a Time Sensitive Network, TSN, stream, comprising the following steps:
storing a mapping table comprising a respective rule parameter for each of one or more TSN domain identifiers such that each of the one or more TSN domain identifiers is related to a respective rule parameter, wherein the TSN domain identifiers identify TSN domains;
monitoring if a request to set up a TSN stream for a TSN domain is received, wherein the TSN domain is identified by a first TSN domain identifier of the one or more TSN domain identifiers;
mapping, if the request is received, the first TSN domain identifier to a first rule parameter of the rule parameters based on the mapping table;
identifying a stored first rule comprising the first rule parameter;
obtaining a network slice identifier from the identified first rule;
requesting to establish a session through a network slice identified by the network slice identifier, wherein the session is to carry the TSN stream.

6. The method according to claim 5, wherein each of the TSN domain identifiers comprises a respective identifier of a time protocol domain and a respective identifier of a stream reservation protocol domain.

7. The method according to any of claims 5 and 6, wherein the rule parameter comprises an application identifier.

8. The method according to any of claims 5 to 7, wherein the rule parameter comprises one of an internet protocol descriptor and a non-internet protocol descriptor.

9. A computer program product comprising a set of instructions which, when executed on an apparatus, is configured to cause the apparatus to carry out the method according to any of claims 5 to 8.

10. The computer program product according to claim 9, embodied as a computer-readable medium or directly loadable into a computer.

## Patentansprüche

1. Vorrichtung, die Folgendes umfasst
Mittel zum Speichern, die dazu ausgelegt sind, eine Zuordnungstabelle zu speichern, die für jede von einer oder mehreren zeitsensitiven Vernetzungs(TSN)-Domänenkennungen einen jeweiligen Regelparameter umfassen, derart, dass jede der einen oder der mehreren TSN-Domänenkennungen einen jeweiligen Regelparameter betrifft, wobei die TSN-Domänenkennungen TSN-Domänen identifizieren;
Mittel zum Überwachen, die dazu ausgelegt sind zu überwachen, ob eine Anforderung zum Einrichten eines TSN-Stroms für eine TSN-Domäne empfangen wird, wobei die TSN-Domäne durch eine erste TSN-Domänenkennung der einen oder der mehreren TSN-Domänenkennungen identifiziert wird;
Mittel zum Zuordnen, die dazu ausgelegt sind, wenn die Anforderung empfangen wird, auf Basis der Zuordnungstabelle die erste TSN-Domänenkennung einem ersten Regelparameter der Regelparameter zuzuordnen;
Mittel zum Identifizieren, die dazu ausgelegt sind, eine gespeicherte erste Regel, die den ersten Regelparameter umfasst, zu identifizieren;
Mittel zum Erhalten, die dazu ausgelegt sind, von der identifizierten ersten Regel eine Netzwerkslicekennung zu erhalten;
Mittel zum Anfordern, die dazu ausgelegt sind, über eine Netzwerkslice, die durch die Netzwerkslicekennung identifiziert wird, den Aufbau einer Sitzung anzufordern, wobei von der Sitzung der TSN-Strom zu transportieren ist.

2. Vorrichtung nach Anspruch 1, wobei jede der TSN-Domänenkennungen eine jeweilige Kennung einer Zeitprotokolldomäne und eine jeweilige Kennung einer Stromreservierungsprotokolldomäne umfasst.

3. Vorrichtung nach einem der Ansprüche 1 und 2, wobei der Regelparameter eine Anwendungskennung umfasst.

4. Vorrichtung nach einem der Ansprüche 1 bis 3, wobei der Regelparameter eines von einem Internetprotokolldeskriptor und einem Nicht-Internetprotokolldeskriptor umfasst.

5. Verfahren zum Aufbauen einer Sitzung eines zeitsensitiven Netzwerk(TSN)-Stroms, das die folgenden Schritte umfasst:
Speichern einer Zuordnungstabelle, die für jede von einer oder mehreren TSN-Domänenkennungen einen jeweiligen Regelparameter umfassen, derart, dass jede der einen oder der mehreren TSN-Domänenkennungen einen jeweiligen Regelparameter betrifft, wobei die TSN-Domänenkennungen TSN-Domänen identifizieren;
Überwachen, ob eine Anforderung zum Einrichten eines TSN-Stroms für eine TSN-Domäne empfangen wird, wobei die TSN-Domäne durch eine erste TSN-Domänenkennung der einen oder der mehreren TSN-Domänenkennungen identifiziert wird;
wenn die Anforderung empfangen wird, Zuordnen der ersten TSN-Domänenkennung auf Basis der Zuordnungstabelle zu einem ersten Regelparameter der Regelparameter;
Identifizieren einer gespeicherten ersten Regel, die den ersten Regelparameter umfasst;
Erhalten einer Netzwerkslicekennung von der identifizierten ersten Regel;
Anfordern des Aufbaus einer Sitzung über eine Netzwerkslice, die durch die Netzwerkslicekennung identifiziert wird, wobei von der Sitzung der TSN-Strom zu transportieren ist.

6. Verfahren nach Anspruch 5, wobei jede der TSN-Domänenkennungen eine jeweilige Kennung einer Zeitprotokolldomäne und eine jeweilige Kennung einer Stromreservierungsprotokolldomäne umfasst.

7. Verfahren nach einem der Ansprüche 5 und 6, wobei der Regelparameter eine Anwendungskennung umfasst.

8. Verfahren nach einem der Ansprüche 5 bis 7, wobei der Regelparameter eines von einem Internetprotokolldeskriptor und einem Nicht-Internetprotokolldeskriptor umfasst.

9. Computerprogrammprodukt, das einen Satz von Anweisungen umfasst, der, wenn er in einer Vorrichtung ausgeführt wird, dazu ausgelegt ist, die Vorrichtung zu veranlassen, das Verfahren nach einem der Ansprüche 5 bis 8 umzusetzen.

10. Computerprogrammprodukt nach Anspruch 9, das als ein computerlesbares Medium realisiert oder direkt in einen Computer ladbar ist.

## Revendications

1. Appareil, comprenant
des moyens de stockage conçus pour stocker une table de mappage comprenant un paramètre de règle respectif pour chacun d'un ou plusieurs identifiants de domaine de réseautage sensible au temps, TSN, de sorte que chacun des un ou plusieurs identifiants de domaine TSN soit lié à un paramètre de règle respectif, dans lequel les identifiants de domaine TSN identifient des domaines TSN ;
des moyens de surveillance conçus pour surveiller la réception d'une demande de configuration d'un flux TSN pour un domaine TSN, dans lequel le domaine TSN est identifié par un premier identifiant de domaine TSN des un ou plusieurs identifiants de domaine TSN ;
des moyens de mappage conçus pour, si la demande est reçue, mapper le premier identifiant de domaine TSN à un premier paramètre de règle des paramètres de règle sur la base de la table de mappage ;
des moyens d'identification conçus pour identifier une première règle stockée comprenant le premier paramètre de règle ;
des moyens d'obtention conçus pour obtenir un identifiant de tranche de réseau à partir de la première règle identifiée ;
des moyens de demande conçus pour demander d'établir une session via une tranche de réseau identifiée par l'identifiant de tranche de réseau, dans lequel la session doit transporter le flux TSN.

2. Appareil selon la revendication 1, dans lequel chacun des identifiants de domaine TSN comprend un identifiant respectif d'un domaine de protocole temporel, et un identifiant respectif d'un domaine de protocole de réservation de flux.

3. Appareil selon l'une des revendications 1 et 2, dans lequel le paramètre de règle comprend un identifiant d'application.

4. Appareil selon l'une des revendications 1 à 3, dans lequel le paramètre de règle comprend un parmi un descripteur de protocole internet et un descripteur de protocole non internet.

5. Procédé d'établissement d'une session pour un flux de réseautage sensible au temps, TSN, comprenant les étapes suivantes :
stocker une table de mappage comprenant un paramètre de règle respectif pour chacun d'un ou plusieurs identifiants de domaine TSN de sorte que chacun des un ou plusieurs identifiants de domaine TSN soit lié à un paramètre de règle respectif, dans lequel les identifiants de domaine TSN identifient des domaines TSN ;
surveiller la réception d'une demande de configuration d'un flux TSN pour un domaine TSN, dans lequel le domaine TSN est identifié par un premier identifiant de domaine TSN des un ou plusieurs identifiants de domaine TSN ;
si la demande est reçue, mapper le premier identifiant de domaine TSN à un premier paramètre de règle des paramètres de règle sur la base de la table de mappage ;
identifier une première règle stockée comprenant le premier paramètre de règle ;
obtenir un identifiant de tranche de réseau à partir de la première règle identifiée ;
demander d'établir une session via une tranche de réseau identifiée par l'identifiant de tranche de réseau, dans lequel la session doit transporter le flux TSN.

6. Procédé selon la revendication 5, dans lequel chacun des identifiants de domaine TSN comprend un identifiant respectif d'un domaine de protocole temporel, et un identifiant respectif d'un domaine de protocole de réservation de flux.

7. Procédé selon l'une des revendications 5 et 6, dans lequel le paramètre de règle comprend un identifiant d'application.

8. Procédé selon l'une des revendications 5 à 7, dans lequel le paramètre de règle comprend un parmi un descripteur de protocole internet et un descripteur de protocole non internet.

9. Produit de programme informatique comprenant un ensemble d'instructions qui, lorsqu'elles sont exécutées sur un appareil, sont conçues pour amener l'appareil à mettre en œuvre le procédé selon l'une des revendications 5 à 8.

10. Produit de programme informatique selon la revendication 9, se présentant sous la forme d'un support lisible par ordinateur ou directement chargeable dans un ordinateur.
